# EUROPEAN PATENT APPLICATION

(11) **EP 4 425 630 A1**
(43) Date of publication of application: **04.09.2024**
(21) Application number: 22887171.1
(22) Date of filing: 28.10.2022
(51) Int. Cl.: H01M 10/052, H01M 4/13, H01M 10/0587

(54) **LITHIUM SECONDARY BATTERY**

(30) Priority: 29.10.2021 JP 2021178041
(71) Applicant: Panasonic Intellectual Property Management Co., Ltd., Kadoma-shi, Osaka 571-0057 (JP)
(72) Inventor: UCHIYAMA, Yohei, Kadoma-shi, Osaka 571-0057 (JP)
(74) Representative: Novagraaf International SA
(86) International application number: PCT/JP2022/040364
(87) International publication number: WO 2023/074846

(57) **Abstract**

A lithium secondary battery including a positive electrode, a negative electrode, a separator disposed between the positive electrode and the negative electrode, and a nonaqueous electrolyte having lithium-ion conductivity. At the negative electrode, lithium metal deposits during charging, and the lithium metal dissolves during discharging. The negative electrode has a porous resin substrate, and a lithium metal layer laminated with the porous resin substrate. The porous resin substrate has a porous region in which the lithium metal layer is not packed.

## Description

### [Technical Field]

The present disclosure relates to a lithium secondary battery.

### [Background Art]

As nonaqueous electrolyte secondary batteries superior in capacity to lithium-ion batteries, lithium secondary batteries (lithium-metal secondary batteries) are seen as promising. In lithium secondary batteries, lithium metal deposits at the negative electrode during charging, and the lithium metal dissolves in the nonaqueous electrolyte during discharging, to release lithium ions.

In lithium secondary batteries, however, the negative electrode undergoes significant changes in volume, due to deposition of lithium metal at the negative electrode during charging and dissolution of the lithium metal during discharging. Therefore, buckling of the electrode, breakage of the electrode, etc. tend to occur.

Patent Literature 1 proposes a metal foil electrode including a reinforcement layer formed from a porous substrate, and first and second layers of metal foil formed comprising lithium and/or sodium. The reinforcement layer is disposed between the first and second metal foil layers and bonded (preferably pressure-bonded) together to form a composite structure having a thickness of 100 microns or less. The pressure-binding step causes the metal to flow into the pores of the porous substrate, to form a metal-to-metal contact through the pores of the reinforcement layer.

### [Citation List]

### [Patent Literature]

Patent Literature 1: Japanese Laid-Open Patent Publication No. 2017-224612

### [Summary of Invention]

### [Technical Problem]

The metal foil electrode of Patent Literature 1 is used for Li-MnO₂ batteries, Li-FeS₂ batteries, Li-SO₂ batteries, Li-SOCl₂ batteries, Li-SO₂Cl₂ batteries, Li-(CF)ₓ batteries, Li-I₂ batteries, and the like.

On the other hand, it is common to use copper for the negative electrode current collector in lithium secondary batteries. It has been found, however, that copper becomes brittle in the state where the negative electrode potential is low. Since the embrittlement of copper accelerates the occurrence of electrode buckling, electrode rupture, etc., the cycle characteristics of lithium secondary batteries show a tendency to deteriorate easily.

### [Solution to Problem]

One aspect of the present disclosure relates to a lithium secondary battery, including: a positive electrode; a negative electrode; a separator disposed between the positive electrode and the negative electrode; and a nonaqueous electrolyte having lithium-ion conductivity, wherein at the negative electrode, lithium metal deposits during charging, and the lithium metal dissolves during discharging, the negative electrode has a porous resin substrate, and a lithium metal layer laminated with the porous resin substrate, and the porous resin substrate has a porous region in which the lithium metal layer is not packed.

### [Advantageous Effects of Invention]

According to the present disclosure, it is possible to suppress the deterioration in cycle characteristics of a lithium secondary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic longitudinal cross-sectional view of a lithium secondary battery according to one embodiment of the present disclosure.
[FIG. 2] An enlarged cross-sectional view of a region II in FIG. 1.
[FIG. 3A] An enlarged cross-sectional view of a region III in FIG. 1.
[FIG. 3B] An enlarged cross-sectional view of a variant of the region III.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B. The phrase "a numerical value A to a numerical value B" can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

Embodiments of the present disclosure relate to a lithium secondary battery (lithium-metal secondary battery) using lithium metal as a negative electrode active material. The lithium secondary battery includes a positive electrode, a negative electrode, a separator disposed between the positive electrode and the negative electrode, and a nonaqueous electrolyte having lithium-ion conductivity. At the negative electrode of the lithium secondary battery, lithium metal deposits during charging, and the lithium metal dissolves during discharging.

In the lithium secondary battery, for example, 70% or more of the rated capacity develops through deposition and dissolution of lithium metal. The migration of electrons at the negative electrode during charging and during discharging is mainly due to the deposition and dissolution of lithium metal at the negative electrode. Specifically, 70 to 100% (e.g., 80 to 100%, 90 to 100%) of the migration of electrons (in other words, current flow) at the negative electrode during charging and during discharging is due to the deposition and dissolution of lithium metal. That is, the negative electrode of the lithium secondary battery differs from a negative electrode at which the migration of electrons at the negative electrode during charging and during discharging is mainly due to absorption and release of lithium ions into and from the negative electrode active material (graphite etc.).

In a battery configured to allow lithium metal to deposit at the negative electrode during charging, the open circuit voltage (OCV) of the negative electrode at full charge is, for example, 70 mV or less versus lithium metal (lithium dissolution/deposition potential). Here, "at full charge" means a state in which the battery is charged until the state of charge (SOC) reaches, for example, 0.98×C or more, where C is the rated capacity of the battery. The OCV of the negative electrode at full charge can be measured by disassembling a fully charged battery in an argon atmosphere, to take out the negative electrode, and assembling a cell using lithium metal as a counter electrode. The nonaqueous electrolyte of the cell may be of the same composition as that in the disassembled battery.

In the following, each component element of the secondary battery will be described step by step.

### [Negative electrode]

In the lithium secondary battery according to an embodiment of the present disclosure, the negative electrode has a porous resin substrate, and a lithium metal layer laminated with the porous resin substrate. That is, the negative electrode is a laminate of a porous resin substrate and a lithium metal layer. The porous resin substrate, unlike Patent Literature 1, has a porous region in which the lithium metal layer is not packed. Hereinafter, such a negative electrode is sometimes referred to as a "negative electrode PSL."

The porous resin substrate has voids throughout. The porous region refers to, of the porous resin substrate, a region where part of the lithium metal layer (that is, lithium metal) has not entered into the voids. Although the whole porous resin substrate may be a porous region, the lithium metal layer, when coming in contact with the principal surface of the porous resin substrate, at least partially enters in a small amount into the voids of the porous resin substrate, and the rest portion becomes a porous region.

The porous resin substrate is usually an electrical insulator and has no current-collecting function, and the lithium metal layer bears a current-collecting function. On a surface (esp., at a connection point with a lead or tab for electrically connecting the negative electrode and a terminal together) of the porous resin substrate, a foundation metal layer of copper, nickel, and the like may be provided. With the foundation metal layer, the deterioration in current-collecting function can be suppressed even when the lithium metal layer is decreased or the lithium metal is converted into a lithium compound during charge-discharge cycles.

The lithium metal layer may have a skin region which is not packed in the porous resin substrate. The skin region is, in other words, the remaining portion of the lithium metal layer not having entered into the voids of the porous resin substrate. That is, the negative electrode can also be seen as a laminate of a porous region, a composite region formed of part of the lithium metal layer having entered into the voids of the porous resin substrate and a remaining portion of the lithium metal layer (i.e., the skin region).

In a lithium secondary battery, during charging, due to the deposition of lithium metal at the negative electrode, the degree of expansion of the negative electrode tends to increase. Here, the "expansion of the negative electrode" means that the sum of the volumes of the negative electrode and the deposited lithium metal increases. Especially when lithium metal deposits in a dendritic form, the expansion amount further increases. Dut to this, a stress is likely to be generated in the negative electrode.

Moreover, when copper is used for the negative electrode, copper becomes brittle in the state where the negative electrode potential is low. The stress generated in the negative electrode and the embrittlement of the copper are combined to cause the negative electrode to deteriorate, accelerating the occurrence of buckling, breakage, etc. When a broken portion of copper is observed with an SEM, a great number of grain-boundary cracks are observed along the grain boundaries of the copper. It can be inferred therefore that the brittle fracture has occurred due to the grain-boundary cracks.

On the other hand, in the negative electrode PSL, the porous resin substrate does not become brittle like copper. The porous resin substrate has a porous portion having many voids and can relax the stress generated in the negative electrode, and thus is highly resistant to stress. The negative electrode PSL, which is a laminate of a porous resin substrate and a lithium metal layer, is less likely to deteriorate and less likely to cause a rapture etc. The porous resin substrate is lightweight, with which the energy density of the lithium secondary battery can be easily increases. Furthermore, the porous resin substrate is hardly cut during roll-to-roll transfer and is easy to handle.

The principal surfaces of the porous resin substrate are surfaces other than the end surfaces of the porous resin substrate, and refer to two surfaces having the largest area. The lithium metal layer may be laminated on each of the two principal surfaces on both sides of the porous resin substrate. The lithium metal layer also has two principal surfaces.

### (First Embodiment)

In the first embodiment, the negative electrode has, on a principal surface on at least one side of the porous resin substrate, a lithium metal layer in contact with that principal surface. Specifically, one of the principal surfaces of the lithium metal layer is in contact with the principal surface of the porous resin substrate. The entire principal surface of the lithium metal layer on the side contacting with the principal surface of the porous resin substrate may be in contact with the principal surface of the porous resin substrate. Alternatively, 90% or more of the area of the principal surface of the lithium metal layer on the side contacting with the principal surface of the porous resin substrate may be in contact with the principal surface of the porous resin substrate. The area of the principal surface used herein is an area in a macro sense or, to put it differently, means an orthographic projection area of the principal surface.

Note that in the negative electrode PSL, a layer formed inevitably may be present between the porous resin substrate and the lithium metal layer. A product produced through a lithium metal-involved reaction is regarded as part of the lithium metal layer. Also, a slight presence of copper between the lithium metal layer and the porous resin substrate so as not to cause substantial influence by embrittlement is permissible.

In the negative electrode PSL, the lithium metal layer may be formed by directly attaching a film of lithium metal to a principal surface of the porous resin substrate. The lithium metal layer may be formed by directly depositing lithium metal on a principal surface of the porous resin substrate using a liquid phase method or a gas phase method. An example of the liquid phase method is an electrodeposition method. An example of the gas phase method is a vapor deposition method. The method for producing the negative electrode PSL or the method for forming the lithium metal layer, however, is not particularly limited.

In one aspect of the first embodiment, the negative electrode has a lithium metal layer on each of the principal surfaces on both sides of the porous resin substrate, and the positive electrode and the negative electrode are wound with a separator interposed therebetween. In this case, the lithium metal layer is in contact with each of the principal surfaces on both sides of the porous resin substrate.

### (Second Embodiment)

In the second embodiment, the negative electrode has, on a principal surface on at least one side of the porous resin substrate, a foundation metal layer in contact with that principal surface. The lithium metal layer is in contact with at least one of a principal surface of the foundation metal layer and the principal surface of the porous resin substrate. Specifically, one of the principal surfaces of the lithium metal layer is in contact with at least one of the principal surfaces of the foundation metal layer and the porous resin substrate. The foundation metal layer serves to improve the current-collecting ability of the negative electrode.

The lithium metal layer may be, for example, in contact with the principal surfaces of both the foundation metal layer and the porous resin substrate. For example, the foundation metal layer may be provided so as to come in contact with only part of the principal surface of the porous resin substrate. In this case, the lithium metal layer can be in contact with the principal surfaces of both the foundation metal layer and the porous resin substrate. For example, of the principal surface of the porous resin substrate, a foundation metal layer may be selectively provided at a connection point with a lead or tab for electrically connecting the negative electrode and a terminal together. The area for providing a foundation metal layer may be, for example, 2% or more and 30% or less, and may be 10% or more and 20% or less, per one principal surface of the porous resin substrate. Such a limited region preferably includes a connection point with a lead or tab.

The foundation metal layer may be provided over, for example, 90% or more of the area, per one principal surface of the porous resin substrate. In this case, the lithium metal layer can be in contact with only the principal surface of the foundation metal layer.

The entire principal surface of the lithium metal layer on the side contacting with the principal surface of the porous resin substrate may be in contact with a principal surface of at least one of the foundation metal layer and the porous resin substrate. Alternatively, 90% or more of the principal surface of the lithium metal layer on the side contacting with the principal surface of the porous resin substrate may be in contact with a principal surface of at least one of the foundation metal layer and the porous resin substrate.

In one aspect of the second embodiment, the negative electrode has a foundation metal layer and a lithium metal layer on each of the principal surfaces on both sides of the porous resin substrate, and the positive electrode and the negative electrode are wound with a separator interposed therebetween. In this case, the lithium metal layers disposed on the principal surfaces on both sides of the porous resin substrate may be respectively in contact with the principal surfaces of the foundation metal layer.

The thickness of the foundation metal layer may be, for example, 2 µm or less, and may be 1 µm or less. In this case, even when the foundation metal layer contains copper, copper is less influenced by embrittlement. However, in view of reliably obtaining the improvement effect of current-collecting ability, the thickness of the foundation metal layer is desirably, for example, 0.05 µm or more.

The foundation metal layer preferably contains, for example, copper, nickel, chromium, titanium, silver, gold, tin, etc., in terms of the ease of ensuring corrosion resistance, conductivity, etc., and in terms of the unlikeliness of being alloyed with lithium.

The foundation metal layer can be formed by, for example, a gas phase method, such as vapor deposition and sputtering, an electroless plating method, an electrolytic plating method, a laminating method, etc., but there is no particular limitation on the forming method.

The thickness of the skin region may be any thickness that can ensure sufficient current-collecting ability during discharging, and, for example, may be 1 µm or more, and may be 5 µm or more in a discharged state with a depth of discharge (DOD) of 90% or more. On the other hand, in view of increasing the energy density of the lithium secondary battery, the thickness of the skin region may be 40 µm or less or 30 µm or less in a discharged state with a depth of discharge of 90% or more. Note that a discharged state with a depth of discharge (DOD) of 90% or more is equivalent to a state of charge (SOC) of 0.1×C or less, where C is the rated capacity of the battery.

The lithium metal layer (or skin region) functions as a negative electrode current collector. During charging, lithium ions contained in the nonaqueous electrolyte receive electrons on the negative electrode to be lithium metal, which deposits on the surface of the negative electrode. The lithium metal deposited on the surface of the negative electrode current collector dissolves during discharging in the form of lithium ions into the nonaqueous electrolyte. The lithium ions contained in the nonaqueous electrolyte may be either derived from a lithium salt added to the nonaqueous electrolyte or supplied from the positive electrode active material during charging, or both.

The lithium metal layer is a layer formed of at least one of lithium metal and a lithium alloy. The lithium alloy preferably contains magnesium. The content of magnesium in the lithium alloy is, for example, 0.1 mass% or more, preferably 0.5 mass% or more or 1 mass% or more, and may be 3 mass% or more or 5 mass% or more. When the content of magnesium in the lithium alloy is within such a range, the effect of suppressing lithium metal from depositing in a dendritic form can be enhanced, and an SEI film with excellent film quality is likely to be formed on the surface of the lithium metal layer. As a result, the cycle characteristics can be further improved. The content of magnesium in the lithium alloy is, for example, 30 mass% or less, and may be 15 mass% or less, or 10 mass% or less. When the content of magnesium in the lithium alloy is within such a range, the proportion of the capacity obtained through deposition and dissolution of lithium metal is increased, leading to a higher capacity. Further, magnesium is likely to be dissolved in lithium to form a solid solution, and a stable lithium alloy is likely to be formed.

The lithium alloy may contain a third element other than lithium (first element) and magnesium (second element). Examples of the third element include aluminum, indium, calcium, lead, hydrogen, sodium, bismuth, copper, and zinc. The lithium alloy may contain one third element, or two or more third elements. The content of the third element in the lithium alloy is, for example, 10 mass% or less, and may be 1 mass% or less, or less than 0.1 mass%.

The void ratio in the porous region is not particularly limited as long as the stress relaxation effect is sufficient, but may be, for example, 30% or more and 80% or less, or 40% or more and 70% or less. Since the porous region is part of the porous resin substrate, the void ratio of the porous resin substrate itself is, for example, 30% or more and 80% or less, and may be 40% or more and 70% or less. Nonaqueous electrolyte may be held in the voids. This is advantageous for allowing the charge-discharge reaction to proceed evenly and improving the output characteristics.

The void ratio can be measured, for example, by the following procedure. First, in a cross-sectional image of the porous region, a resin region and a void region that constitute the porous region are distinguished by binarization. In the cross-sectional image after binarization, a total area S0 of the resin region and the void region is determined, and an area S 1 of the void region is determined. Then, the ratio of S 1 to S0 = S1×100/S0 (%) is calculated. This area ratio is referred to as a void ratio P. The ratio of S 1 to S0 may be measured at, for example, 10 points in the cross-sectional image after binarization, and an average of the measured values may be referred to as a void ratio P.

The porous resin substrate is a porous substrate whose major component is a resin or an organic substance, and 40 vol% or more of the porous resin substrate is constituted of a resin or an organic substance.

The porous resin substrate may be electrically non-conductive or insulative. Resins or organic materials are usually electrically non-conductive or insulative. Many of electrically non-conductive or insulative resins have high tensile strength and large breaking elongation. Therefore, when the porous resin substrate is electrically non-conductive or insulating, the material selection can be wide.

The resin contained in the porous resin substrate may be fibrous. In other words, the porous resin substrate may be a nonwoven fabric, a woven fabric, and the like. Nonwoven fabrics, woven fabrics, and the like have a high void ratio and exhibits the stress relaxation effect greatly, and thus, can significantly suppress the deterioration in cycle characteristics of lithium secondary batteries.

The resin contained in the porous resin substrate may be non-fibrous. In this case, the porous resin substrate has, at least, a form different from nonwoven fabrics and woven fabrics, and has, for example, a form of microporous film. The microporous film may be a porous stretched film.

The porous resin substrate may contain inorganic particles. The inorganic particles may be, for example, kneaded into the resin contained in the porous resin substrate. When the resin contained in the porous resin substrate is fibrous, inorganic particles may be kneaded into the resin constituting the fibers. When the resin contained in the porous resin substrate is non-fibrous, inorganic particles may be, for example, kneaded into the resin constituting the microporous film.

The porous resin substrate may have a single layer structure or a multilayer structure. For example, a resin layer containing inorganic particles may be laminated on a base substrate constituting the porous resin substrate. The resin layer containing inorganic particles may be an applied film of a mixture of inorganic particles and a resin binder having bonding properties, or may be a composite of inorganic particles and a high-strength resin. Examples of the resin binder include fluorocarbon resin, polyacrylonitrile, polyimide resin, acrylic resin, polyolefin resin, and rubbery polymer. Examples of the fluorocarbon resin include polytetrafluoroethylene, polyvinylidene fluoride, and poly-N-vinylacetamide. Examples of the rubbery polymer include a styrene-butadiene copolymer. Preferred as the high-strength resin are polyimide resin and polyamide resin (esp., aromatic polyamide resin). The content of the inorganic particles contained in the resin layer may be, for example, 50 mass% to 99 mass%.

Examples of the inorganic particles that can be used include, but are not limited to, silica, alumina, magnesia, boehmite, silica alumina, zeolite, and gibbsite. The average particle size of the inorganic particles may be, for example, 0.1 µm to 1 µm. The average particle diameter of the inorganic particles is determined on a plurality of (e.g. 30) randomly selected inorganic particles in a cross-sectional image of the porous region, and determined as an average value of the diameters of equivalent circles each having the same area as the area surrounded by the outline of each of the selected inorganic particles. For the cross-sectional imaging, a transmission electron microscope (TEM) may be used.

Examples of the resin contained in the porous resin substrate include, but not limited to, polyolefin, such as polyethylene and polypropylene, polyester, polyamide, polyimide, cellulose, and polymethylpentene. In particular, a resin having an aromatic ring and containing no fluorine atom is desirable. When the resin has an aromatic ring (e.g., a benzene ring) in its molecule, the affinity between the porous resin substrate and the lithium metal layer is enhanced, leading to an improved adhesive force between the two. When the resin contains no fluorine atom in its molecules, side reactions between the lithium metal layer and the porous resin substrate hardly proceed. As the polyester, an aromatic polyester is preferred, and polyethylene terephthalate, polybutylene terephthalate, and the like are particularly preferred because of their inexpensive prices. As the polyimide, an aromatic polyimide is preferred, and as the polyamide, an aromatic polyamide (aramid) is preferred.

The tensile strength of the porous resin substrate in the MD direction is, for example, 100 N/m or more, may be 200 N/m or more, and may be 400 N/m or more. The upper limit of the tensile strength of the porous resin substrate is not particularly limited, but may be, for example, 1500 N/m or less, in view of ensuring sufficient flexibility to relax the stress.

The breaking elongation of the porous resin substrate may be, for example, 5% or more, may be 30% or more, may be 50% or more, and may be 100% or more. The upper limit of the breaking elongation of the porous resin substrate is not particularly limited, but may be, for example, 300% or less, in view of ensuring sufficient mechanical strength.

The tensile strength (N/m) of the porous resin substrate in the MD direction is determined by a method in accordance with JIS L 1913:2010. Five test pieces each having a width of 50 ± 0.5 mm and such a length (e.g., 300 mm) that the free length between grips can be set to 200 mm are sampled from the porous resin substrate along the MD direction, at positions 100 mm or more away from the edge of the porous resin substrate and equally spaced from each other. The test pieces are each applied with a load at a tensile speed of 100±10 mm/min until it breaks. The tensile strength of the test piece at the maximum load is measured to the nearest 0.1 N, and the length L at the maximum load is measured to the nearest 1 mm, to calculate an elongation rate (100×(L-L0)/L0 (%)). The tensile strength is converted and expressed as a value per 1 meter.

In view of increasing the energy density of the lithium secondary battery, a thinner thickness of the porous resin substrate is more desirable, as long as the mechanical strength is ensured. The thickness of the porous resin substrate may be, for example, 5 µm or more and 80 µm or less, and may be 10 µm or more and 30 µm or less.

The thicknesses of the skin region of the lithium metal layer and the porous resin substrate may be each determined by measuring the thickness at randomly selected 10 points on a cross section of the negative electrode with a scanning electron microscope (SEM), and calculating an average of the measured values.

The negative electrode may have the lithium metal layer on each of the principal surfaces on both sides of the porous resin substrate. In this case, an electrode group may be configured by winding the positive electrode and the negative electrode with a separator interposed therebetween. That is, the lithium secondary battery may include a wound electrode group. In general, in a wound electrode group, stress easily occurs during charging and discharging, tending to cause a rapture of the negative electrode. In particular, on the outer peripheral side of the wound electrode group, a great tensile tension may be applied to the negative electrode in some cases. However, since the negative electrode PSL includes a porous region, the elasticity of the porous region can significantly relieve the tensile tension even on the outer peripheral side of the wound electrode group, and the occurrence of a rapture of the negative electrode can be significantly suppressed.

### [Positive electrode]

The positive electrode includes, for example, a positive electrode current collector, and a positive electrode mixture layer supported on the positive electrode current collector. The positive electrode mixture layer can be formed by applying a positive electrode slurry of a positive electrode mixture dispersed in a dispersion medium, onto a surface of the positive electrode current collector, followed by drying. The dry applied film may be rolled as necessary. The positive electrode mixture material includes a positive electrode active material as an essential component, and can include a binder, a conductive agent, etc. as optional components. The positive electrode mixture layer may be formed on only one side of the positive electrode current collector, or may be formed on both sides.

The positive electrode active material is a material that develops capacity through absorption and release of lithium ions thereto and therefrom. Examples of the positive electrode active material include a lithium-containing transition metal oxide, a transition metal fluoride, a polyanion, a fluorinated polyanion, and a transition metal sulfide. In particular, as a positive electrode active material for a lithium secondary battery, because of its low manufacturing cost and high average discharge voltage, a lithium-containing transition metal oxide which is used also as a positive electrode active material for a lithium-ion secondary battery is preferred.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one transition metal element, or two or more transition metal elements. The transition metal element may be Co, Ni and/or Mn, and containing at least Ni is preferable in terms of achieving high capacity and low cost. The lithium-containing transition metal oxide may contain one or more typical elements as necessary. Examples of the typical element include Mg, Al, Ca, Zn, Ga, Ge, Sn, Sb, Pb, and Bi. The typical element may be Al and the like.

The conductive material is, for example, a carbon material. Examples of the carbon material include carbon black, acetylene black, Ketjen black, carbon nanotubes, and graphite.

Examples of the binder include fluorocarbon resin, polyacrylonitrile, polyimide resin, acrylic resin, polyolefin resin, and rubbery polymer. Examples of the fluorocarbon resin include polytetrafluoroethylene and polyvinylidene fluoride.

The positive electrode current collector is in the form of foil, film, and the like. The positive electrode current collector may have a carbon material applied to its surface. The material of the positive electrode current collector may be, for example, a metal material including Al, Ti, Fe, and the like. The metal material may be Al, an Al alloy, Ti, a Ti alloy, a Fe alloy, etc. The Fe alloy may be stainless steel (SUS). The thickness of the positive electrode current collector is not particularly limited, and is, for example, 5 µm or more and 30 µm or less.

### [Separator]

Usually, it is desirable that a separator is interposed between the positive electrode and the negative electrode. The separator is excellent in ion permeability and has moderate mechanical strength and electrically insulating properties. As the separator, a microporous thin film, a woven fabric, a nonwoven fabric, and the like can be used. The material of the separator is preferably a polyolefin, such as polypropylene and polyethylene, polymethylpentene, polyethylene terephthalate, polybutylene terephthalate, aramid, cellulose, and the like.

As the separator, one sheet may be interposed between the positive electrode and the negative electrode, and a plurality of sheets may be interposed therebetween. When a plurality of sheets are interposed as the separator between the positive electrode and the negative electrode, a plurality of sheets of one selected from microporous thin film, woven fabric, and nonwoven fabric may be stacked and used, or a plurality of sheets of at least two selected from microporous thin film, woven fabric, and nonwoven fabric may be stacked and used. The thickness of the separator when one sheet is interposed is not particularly limited, but is preferably 5 to 80 µm. The thickness of the separator when a plurality of sheets are interposed is also not particularly limited, but is preferably 5 to 80 µm.

A separator may be used as the porous resin substrate constituting the negative electrode. That is, the negative electrode may be constituted of a separator and a lithium metal layer laminated on the separator. In this case, as the porous resin substrate, a separator publicly known or used as a separator for lithium secondary batteries may be used, or a separator publicly known or used as a separator for lithium-ion secondary batteries, lithium-ion capacitors, electric double layer capacitors, etc. may be used. In order to absorb the stress caused due to expansion of the dendrites, separators may be stacked in multi layers and used.

The separator used as the porous resin substrate may have a single layer structure or a multilayer structure. The separator used as the porous resin substrate may have a heat-resistant layer containing inorganic particles. The heat-resistant layer may be formed as a surface layer on one side or both sides of the separator. The heat-resistant layer may contain a high-strength resin as already described. As the inorganic particles, materials as already described can be used. When the thickness of the porous resin substrate is denoted by T, the thickness occupied by the heat-resistant layer may be in the range of 0.1T to 1.5T.

### [Nonaqueous electrolyte]

The nonaqueous electrolyte having lithium-ion conductivity may be a liquid electrolyte (electrolyte solution), may be a gel electrolyte, and may be a solid electrolyte. The liquid electrolyte (electrolyte solution) contains, for example, a nonaqueous solvent and a lithium salt dissolved in the nonaqueous solvent. The liquid electrolyte can be prepared by dissolving a lithium salt in a nonaqueous solvent. When the lithium salt is dissolved in the nonaqueous solvent, lithium ions and anions are produced.

The gel electrolyte contains a lithium salt and a matrix polymer, or contains a lithium salt, a nonaqueous solvent, and a matrix polymer. As the matrix polymer, for example, a polymer material to be gelled when it absorbs a nonaqueous solvent is used. Examples of the polymer material include fluorocarbon resin, acrylic resin, and polyether resin.

The solid electrolyte may be an inorganic solid electrolyte. As the inorganic solid electrolyte, for example, any known material for use in all-solid lithium-ion secondary batteries and the like (e.g., oxide-based solid electrolyte, sulfide-based solid electrolyte, halide-based solid electrolyte, etc.) are used.

As an anion of the lithium salt, any known anions for use in nonaqueous electrolyte of lithium secondary batteries can be used. Specific examples thereof include BF₄⁻, ClO₄⁻, PF₆⁻, CF₃SO₃⁻, CF₃CO₂⁻, imide anions, and an oxalate complex anion. Examples of the imide anions include N(SO₂F)₂⁻, and N(SO₂CF₃)₂⁻. The oxalate complex anion may contain boron and/or phosphorus. Examples of the oxalate complex anion include bisoxalateborate anion, BF₂(C₂O₄)⁻, PF₄(C₂O₄)⁻, and PF₂(C₂O₄)₂⁻. The nonaqueous electrolyte may contain one kind of lithium salt singly, or may contain two or more kinds of lithium salts.

In view of suppressing lithium metal from depositing in a dendritic form, the nonaqueous electrolyte preferably contains at least an oxalate complex anion. The oxalate complex anion interacts with lithium, making it more likely for a lithium metal to deposit uniformly in the form of fine particles. Therefore, local deposition of lithium metal is suppressed. The nonaqueous electrolyte may include an oxalate complex anion and another anion. The other anion may be PF₆⁻ and/or imide anions.

As the nonaqueous solvent, an ester compound, an ether compound, a nitrile compound, an amide compound, and the like can be used. These compounds include a halogen-substituted derivative. The halogen-substituted derivative is exemplified by a fluoride. The nonaqueous electrolyte may contain these nonaqueous solvents singly, or in combination of two or more kinds.

The nonaqueous solvent may contain at least an ether compound as a major component. The major component means the content of the ether compound in the nonaqueous solvent being 50 mass% or more, which may be 80 mass% or more. The content of the ether compound in the nonaqueous solvent may be 95 mass% or less, and may be 100 mass% or less. With regard to the range of the content of the ether compound in the nonaqueous solvent, the above upper and lower limits can be combined in any combination.

The ether compound is excellent in stability (especially in reduction resistance), and the production of decomposition products on the negative electrode surface is suppressed. Presumably as a result, the expansion of the negative electrode can be suppressed.

As the ether compound, a cyclic ether and a chain ether are exemplified. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methylphenyl ether, benzyl ethyl ether, diphenyl ether, dibenzyl ether, 1,2-diethoxyethane, diethylene glycol dimethyl ether, 1,1,2,2-tetrafluoroethyl-2,2,2-trifluoroethyl ether, and 1,1,2,2-tetrafluoroethyl-2,2,3,3-tetrafluoropropyl ether. In particular, 1,2-dimethoxyethane, and 1,1,2,2-tetrafluoroethyl-2,2,2-trifluoroethyl ether are preferred. These may be used singly or in combination of two or more kinds.

As the ester compound, for example, a carbonic acid ester, a carboxylic acid ester, and the like are exemplified. Examples of a cyclic carbonic acid ester include ethylene carbonate, and propylene carbonate. Examples of a chain carbonic acid ester include dimethyl carbonate (DMC), ethyl methyl carbonate (EMC), and diethyl carbonate. Examples of a cyclic carboxylic acid ester include γ-butyrolactone, and γ-valerolactone. Examples of a chain carboxylic acid ester include ethyl acetate, methyl propionate, and methyl fluoropropionate. These may be used singly or in combination of two or more kinds.

The concentration of the lithium salt in the nonaqueous electrolyte (e.g., electrolyte solution) is, for example, 0.5 mol/L or more and 3.5 mol/L or less. The concentration of the anion in the nonaqueous electrolyte may be set to 0.5 mol/L or more and 3.5 mol/L or less. The concentration of the oxalate complex anion in the nonaqueous electrolyte may be set to 0.05 mol/L or more and 1 mol/L or less.

The nonaqueous electrolyte may contain an additive. The additive may form a surface film on the negative electrode. When the surface film derived from the additive is formed on the negative electrode, the dendrite formation and growth can be easily suppressed. Examples of the additive include vinylene carbonate, fluoroethylene carbonate (FEC), and vinyl ethyl carbonate (VEC).

### [Lithium secondary battery]

In the following, the configuration of a lithium secondary battery according to the present disclosure will be described with reference to the drawings, using a cylindrical battery including a wound electrode group as an example. It is to be noted, however, that the present disclosure is not limited to the following configuration.

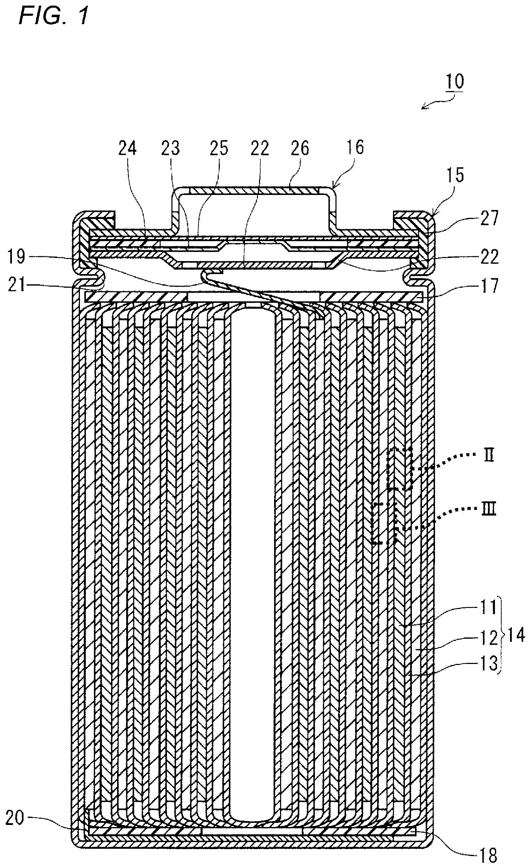

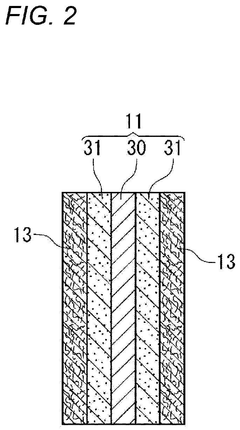

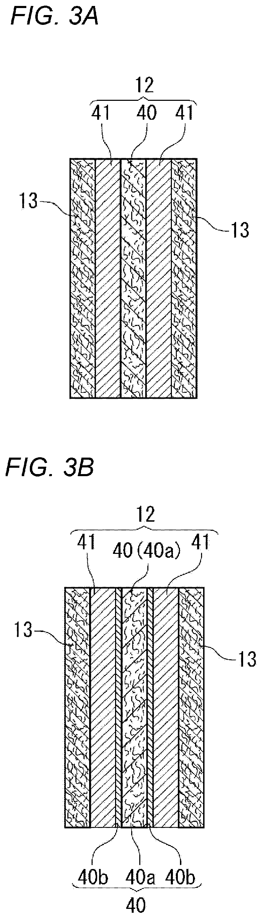

FIG. 1 is a schematic longitudinal cross-sectional view of a lithium secondary battery according to an embodiment of the present disclosure. FIG. 2 is an enlarged view of a portion (a portion including the positive electrode) surrounded by the region II in FIG. 1. FIG. 3Ais an enlarged view of a portion (a portion including the negative electrode) surrounded by the region III in FIG. 1. FIG. 3B is an enlarged view of a variant of the portion surrounded by the region III in FIG. 1. Note that each figure is a schematic illustration, and the ratio of the dimensions (e.g., thickness) and the like of the component members may differ from the actual ones.

A lithium secondary battery 10 includes a cylindrical battery case, a wound electrode group 14 and a nonaqueous electrolyte (not shown) housed in the battery case. The electrode group 14 is constituted by winding a belt-like positive electrode 11 and a belt-like negative electrode 12, with a separator 13 interposed between the positive electrode 11 and the negative electrode 12.

In FIG. 3A, the negative electrode 12 is constituted of a porous resin substrate 40 and a lithium metal layer 41. In FIG. 3B, the porous resin substrate 40 has a porous region 40a and a composite region 40b. The composite region 40b is formed as a result of entry of part of the lithium metal layer 41 into the voids of the porous resin substrate 40. The remaining portion of the lithium metal layer 41 corresponds to the already-described skin layer. The negative electrode 12 is electrically connected via a negative electrode lead 20 to a case body 15 serving as a negative electrode terminal. One end of the negative electrode lead 20 is connected, for example, to the longitudinal end of the negative electrode 12, and the other end thereof is welded to the inner bottom surface of the case body 15.

The positive electrode 11 includes a positive electrode current collector 30 and a positive electrode mixture layer 31, and is electrically connected via a positive electrode lead 19 to a cap 26 serving as a positive electrode terminal. One end of the positive electrode lead 19 is connected to, for example, near the center of the positive electrode 11 in the longitudinal direction. The positive electrode lead 19 extending from the positive electrode 11 passes through a through-hole (not shown) formed in an insulating plate 17 and extends to a filter 22. The other end of the positive electrode lead 19 is welded to the surface of the filter 22 on the side facing the electrode group 14.

The battery case includes the case body 15 which is a bottomed cylindrical container made of metal, and a sealing body 16 sealing the opening of the case body 15. A gasket 27 is disposed between the case body 15 and the sealing body 16, ensuring the airtightness of the battery case. Within the case body 15, the insulating plate 17 and an insulating plate 18 are disposed respectively at one and the other end of the electrode group 14 in the winding axis direction.

The case body 15 has, for example, a step portion 21 formed by pressing the side wall of the case body 15 partially from outside. The step portion 21 may be formed annularly on the side wall of the case body 15 along the circumferential direction of the case body 15. In this case, the sealing body 16 is supported on the step portion 21 on the side facing the opening.

The sealing body 16 includes the filter 22, a lower valve body 23, an insulating member 24, an upper valve body 25, and the cap 26. In the sealing body 16, these members are stacked in this order. The sealing body 16 is fitted at the opening of the case body 15, with the cap 26 positioned outside the case body 15 and the filter 22 positioned inside the case body 15. Each of the aforementioned members constituting the sealing body 16 has, for example, a disk shape or a ring shape. The lower valve body 23 and the upper valve body 25 are connected to each other at their respective central portions, and the insulating member 24 is interposed between their respective peripheral portions. The filter 22 and the lower valve body 23 are connected to each other at their respective peripheral portions. The upper valve body 25 and the cap 26 are connected to each other at their respective peripheral portions. In short, the members except the insulating member 24 are electrically connected to each other.

The lower valve body 23 is provided with a vent hole (not shown). Therefore, when the internal pressure of the battery case rises due to abnormal heat generation or other events, the upper valve body 25 bulges toward the cap 26 and spaced away from the lower valve body 23. This breaks the electrical connection between the lower valve body 23 and the upper valve body 25. When the internal pressure further rises, the upper valve body 25 raptures, to let the gas escape though an aperture (not shown) formed in the cap 26.

Although in the illustrated example, a cylindrical lithium secondary battery is described, the present embodiment can be applied without limited thereto. The shape of the lithium secondary battery may be selected according to its use and the like from a cylindrical shape and other various shapes, such as coin, prismatic, sheet, and flat shapes. Although the illustrated example includes a wound electrode group constituted by winding a positive electrode and a negative electrode, with a separator interposed therebetween, the electrode group also may be in any form, and may be a stacked electrode group constituted by stacking a positive electrode and a negative electrode, with a separator interposed therebetween. For other constitutions except the electrode group and the nonaqueous electrolyte of the lithium secondary battery, any known ones can be used without particular limitation.

### <Examples>

The lithium secondary battery according to the present disclosure will be specifically described below with reference to Examples and Comparative Examples. The present disclosure, however, is not limited to the following Examples.

### «Examples 1 to 17»

### (1) Production of positive electrode

A lithium-containing transition metal oxide (NCA; positive electrode active material) containing Li, Ni, Co, and Al, acetylene black (AB; conductive material), and polyvinylidene fluoride (PVdF; binder) were mixed in a mass ratio of NCA:AB:PVdF = 95:2.5:2.5, to which N-methyl-2-pyrrolidone (NMP) was further added in an appropriate amount and stirred, to prepare a positive electrode mixture slurry. Next, the prepared positive electrode mixture slurry was applied onto both sides of an Al foil (thickness 15 µm) that functions as a positive electrode current collector, and then dried, followed by rolling of the applied films of the positive electrode mixture using a roller. Lastly, the resultant stack of the positive electrode current collector and the positive electrode mixture layers was cut in a predetermined electrode size, to obtain a positive electrode with a positive electrode mixture layer (thickness 65 µm) formed on each of both sides of the positive electrode current collector.

### (2) Production of negative electrode

Nonwoven fabrics each having a thickness and a void ratio as shown in Tables 1 and 2 were prepared as porous resin substrates (base substrates). The resin that constituted the fibers of the nonwoven fabrics was polyethylene terephthalate. In an inert gas atmosphere, a lithium foil (thickness 5 µm or 30 µm) was pressure-bonded onto both sides of each nonwoven fabric, to produce negative electrodes each including a lithium metal layer (lithium foil) laminated on each of both sides of the nonwoven fabric. During pressure-bonding, lithium metal slightly entered into the voids of the nonwoven fabric, but the thickness of the remaining portion (skin layer) was almost unchanged to be approximately 5 µm or 30 µm.

In E5 only, a lithium alloy foil (thickness 30 µm) containing 5 mass% of magnesium was used in addition to lithium.

In E4 to E17, a foundation metal layer (0.2 µm or 1 µm thick) of copper, chromium, silver, or nickel was formed on each of both sides of the nonwoven fabric or microporous film by vapor deposition.

In E12 and E15, a resin layer containing boehmite (average particle diameter 0.5 µm) as inorganic particles and aramid as a high-strength resin was formed on each of both sides of the nonwoven fabric or microporous film. In E12 and E15, the contents of boehmite in the resin layers were 95 mass% and 97 mass%, respectively. The thickness of the resin layer was 2 µm per side.

In E13, E14, E16, and E17, a resin layer containing alumina (average particle diameter 0.2 µm) as inorganic particles and aramid as a high-strength resin was formed on each of both sides of the nonwoven fabric or microporous film. In E13 and E14, the content of alumina in the resin layers was 95 mass%. In E16 and E17, the content of alumina in the resin layers was 97 mass%. The thickness of the resin layer was 2 µm per side.

In E15 to 17, instead of the nonwoven fabric, a microporous polyethylene film (thickness 15 µm or 30 µm, void ratio 65%) was used as the porous resin substrate.

### (3) Preparation of nonaqueous electrolyte

In a nonaqueous solvent, LiPF₆ was dissolved at a concentration of 1 mol/L, or LiBF₂(C₂O₄) was dissolved at a concentration of 0.1 mol/L, to prepare a liquid of nonaqueous electrolyte. The nonaqueous solvent used here was a mixed solvent of 1,2-dimethoxyethane and 1,1,2,2-tetrafluoroethyl-2,2,2-trifluoroethyl ether.

### (4) Fabrication of battery

To the positive electrode obtained above, a tab made of Al was attached. To the negative electrode obtained above, a tab made of Ni was attached. In an inert gas atmosphere, the positive electrode and the negative electrode were spirally wound, with a separator interposed between the positive electrode and the negative electrode, to form a wound electrode group. For the separator, two kinds of polyethylene microporous films (separator A having a thickness of 15 µm or separator B having a thickness of 30 µm) were used. When using two sheets in a stack (E3 to E16, R1), the separator B was placed adjacent to both surfaces of the positive electrode. The obtained electrode group was housed in a pouch-like outer body formed of a laminate sheet having an Al layer. The nonaqueous electrolyte was injected into the outer body including the electrode group housed therein, and then, the outer body was sealed. A lithium secondary battery was thus produced. In Tables 1 and 2, E1 to E17 are batteries of Examples 1 to 17.

### [Evaluation]

### <Cycle characteristics>

Each of the obtained batteries was subjected to a charge-discharge cycle test in a 25 °C environment. Charging and discharging were performed under the following conditions. A rest of 20 minutes was performed between charging and discharging.

### (Charging)

A constant-current charging was performed at 10 mA until the voltage reached 4.1 V, and then, a constant-voltage charging was performed at 4.1 V until the current reached 1 mA.

### (Discharging)

A constant-current discharging was performed at 10 mA until the voltage reached 3 V

Charging and discharging were repeated up to 100 cycles, to measure a discharge capacity at the 100th cycle. The evaluation results are shown in Tables 1 and 2. In Tables 1 and 2, the discharge capacity at the 100th cycle of each battery is shown as a relative value when the discharge capacity of the battery E1 at the 100th cycle taken as 100.

<Energy density>

The energy density per unit volume was calculated from the battery volume and design capacity of the battery, and determined as a relative value with the energy density of the battery E1 taken as 100. The results are shown in Tables 1 and 2.

**[Table 1]**

| battery | porous resin substrate | | | | | | foundation metal layer | | lithium metal layer | | separator | | evaluation result | |
|---|---|---|---|---|---|---|---|---|---|---|---|---|---|---|
| | base substrate | | | resin layer | | | | | | | | | | |
| | material | thickness | void ratio | position | thickness | inorganic particles | metal | thickness | metal | thickness | A | B | discharge capacity | energy density |
| | | (µm) | (%) | | (µm) | | | (µm) | | (µm) | µm | µm | (relative value) | (relative value) |
| E1 | nonwoven fabric | 20 | 45 | - | - | - | - | - | Li | 5 | 15 | - | 100 | 100 |
| E2 | nonwoven fabric | 20 | 45 | - | - | - | - | - | Li | 5 | 15 | - | 102 | 98 |
| E3 | nonwoven fabric | 20 | 45 | - | - | - | - | - | Li | 30 | 15 | 30 | 104 | 96 |
| E4 | nonwoven fabric | 20 | 45 | - | - | - | Cu | 0.2 | Li | 30 | 15 | 30 | 110 | 96 |
| E5 | nonwoven fabric | 20 | 45 | - | - | - | Cu | 0.2 | Li | 30 | 15 | 30 | 111 | 96 |
| E6 | nonwoven fabric | 20 | 45 | - | - | - | Cr | 0.2 | Li-Mg | 30 | 15 | 30 | 109 | 96 |
| E7 | nonwoven fabric | 20 | 45 | - | - | - | Ni | 0.2 | Li | 30 | 15 | 30 | 107 | 96 |
| E8 | nonwoven fabric | 20 | 45 | - | - | - | Ag | 0.2 | Li | 30 | 15 | 30 | 110 | 96 |
| E9 | nonwoven fabric | 30 | 45 | - | - | - | Cu | 0.2 | Li | 30 | 15 | 30 | 113 | 95 |
| E10 | nonwoven fabric | 30 | 70 | - | - | - | Cu | 0.2 | Li | 30 | 15 | 30 | 115 | 95 |
| E11 | nonwoven fabric | 40 | 70 | - | - | - | Cu | 0.2 | Li | 30 | 15 | 30 | 116 | 95 |

**[Table 2]**

| battery | porous resin substrate | | | | | | foundation metal layer | | lithium metal layer | | separator | | evaluation result | |
|---|---|---|---|---|---|---|---|---|---|---|---|---|---|---|
| | base substrate | | | resin layer | | | | | | | | | | |
| | material | thickness | void ratio | position | thickness | inorganic particles | metal | thickness | metal | thickness | A | B | discharge capacity | energy density |
| | | (µm) | (%) | | (µm) | | | (µm) | | (µm) | µm | µm | (relative value) | (relative value) |
| E12 | nonwoven fabric | 30 | 70 | both sides | 2 | boehmite | Cu | 0.2 | Li | 30 | 15 | 30 | 117 | 95 |
| E13 | nonwoven fabric | 30 | 70 | both sides | 2 | alumina | Cu | 0.2 | Li | 30 | 15 | 30 | 118 | 95 |
| E14 | nonwoven fabric | 30 | 70 | both sides | 2 | alumina | Cu | 1 | Li | 30 | 15 | 30 | 122 | 95 |
| E15 | microporous film | 15 | 65 | both sides | 2 | boehmite | Cu | 0.2 | Li | 30 | 15 | 30 | 55 | 98 |
| E16 | microporous film | 15 | 65 | both sides | 2 | alumina | Cu | 0.2 | Li | 30 | 15 | 30 | 70 | 98 |
| E17 | microporous film | 30 | 60 | both sides | 2 | alumina | Cu | 0.2 | Li | 30 | 15 | 30 | 68 | 98 |
| R1 | electrolytic Cu foil | 12 | 0 | - | - | | - | - | Li | 30 | 15 | 30 | 40 | 105 |

### <<Comparative Example 1»

A lithium secondary battery R1 was produced and evaluated in the same manner as in Example 3, except that an electrolytic copper foil (thickness 12 µm) was used, instead of a laminate of the porous resin substrate and the lithium metal layer, as the negative electrode. The results are shown in Table 2 with the above relative value.

In the batteries E1 to E17, as compared to the battery R1, the discharge capacity at the 100the cycle was high, and the cycle characteristics were improved. Each battery after 100 cycles was disassembled, and a SEM observation was performed on the negative electrode. The result confirmed that a rupture of the copper foil had occurred in R1. On the other hand, in E1 to E17, no breakage or buckling of the negative electrode was observed.

### [Industrial Applicability]

The lithium secondary battery of the present disclosure is applicable to electronic equipment, such as cellular phones, smart phones, and tablet terminals, electric cars including hybrids and plug-in hybrids, home storage battery systems combined with a solar cell, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 10: lithium secondary battery
- 11: positive electrode
- 12: negative electrode
- 13: separator
- 14: electrode group
- 15: case body
- 16: sealing body
- 17, 18: insulating plate
- 19: positive electrode lead
- 20: negative electrode lead
- 21: step portion
- 22: filter
- 23: lower valve body
- 24: insulating member
- 25: upper valve body
- 26: cap
- 27: gasket
- 30: positive electrode current collector
- 31: positive electrode mixture layer
- 40: porous resin substrate
- 40a:: porous region
- 40b:: composite region
- 41: lithium metal layer

## Claims

1. A lithium secondary battery, comprising:
a positive electrode;
a negative electrode;
a separator disposed between the positive electrode and the negative electrode; and
a nonaqueous electrolyte having lithium-ion conductivity, wherein
at the negative electrode, lithium metal deposits during charging, and the lithium metal dissolves during discharging,
the negative electrode has a porous resin substrate, and a lithium metal layer laminated with the porous resin substrate, and
the porous resin substrate has a porous region in which the lithium metal layer is not packed.

2. The lithium secondary battery according to claim 1, wherein
the negative electrode has the lithium metal layer on a principal surface on at least one side of the porous resin substrate, and
the lithium metal layer is in contact with the principal surface of the porous resin substrate.

3. The lithium secondary battery according to claim 2, wherein
the negative electrode has the lithium metal layer on each of the principal surfaces on both sides of the porous resin substrate, and
the positive electrode and the negative electrode are wound, with the separator interposed between the positive electrode and the negative electrode.

4. The lithium secondary battery according to claim 1, wherein
the negative electrode has a foundation metal layer on a principal surface on at least one side of the porous resin substrate,
the foundation metal layer is in contact with the principal surface of the porous resin substrate, and
the lithium metal layer is in contact with at least one of a principal surface of the foundation metal layer and the principal surface of the porous resin substrate.

5. The lithium secondary battery according to claim 4, wherein the negative electrode has the foundation metal layer and the lithium metal layer on each of the principal surfaces on both sides of the porous resin substrate, and the positive electrode and the negative electrode are wound, with the separator interposed between the positive electrode and the negative electrode.

6. The lithium secondary battery according to claim 4 or 5, wherein a thickness of the foundation metal layer is 2 µm or less.

7. The lithium secondary battery according to any one of claims 1 to 6, wherein
the lithium metal layer has a skin region which is not packed in the porous resin substrate, and
a thickness of the skin region may be 40 µm or less in a discharged state with a depth of discharge of 90% or more.

8. The lithium secondary battery according to any one of claims 1 to 7, wherein a void ratio in the porous region 30% or more and 80% or less.

9. The lithium secondary battery according to any one of claims 1 to 8, wherein the porous resin substrate is electrically non-conductive or insulative.

10. The lithium secondary battery according to any one of claims 1 to 9, wherein a resin contained in the porous resin substrate is fibrous.

11. The lithium secondary battery according to any one of claims 1 to 9, wherein a resin contained in the porous resin substrate is non-fibrous.

12. The lithium secondary battery according to any one of claims 1 to 11, wherein the porous resin substrate contains inorganic particles.

13. The lithium secondary battery according to any one of claims 1 to 12, wherein a thickness of the porous resin substrate is 5 µm or more and 80 µm or less.

14. The lithium secondary battery according to any one of claims 1 to 13, wherein the positive electrode contains a lithium-containing transition metal oxide as a positive electrode active material.

15. The lithium secondary battery according to any one of claims 1 to 14, wherein the lithium metal layer contains magnesium.
